# EUROPEAN PATENT SPECIFICATION

(11) **EP 1 759 251 B1**
(45) Date of publication and mention of the grant of the patent: **27.07.2011**
(21) Application number: 05757169.7
(22) Date of filing: 03.06.2005
(51) Int. Cl.: G05B 19/418

(54) **REMOTE PROCESSING AND PROTOCOL CONVERSION INTERFACE MODULE**
FERNVERARBEITUNGS- UND PROTOKOLLUMSETZUNGS-SCHNITTSTELLENMODUL
MODULE D'INTERFACE DE CONVERSION DE PROTOCOLE ET DE TRAITEMENT A DISTANCE

(30) Priority: 08.06.2004 US 863610
(43) Date of publication of application: 07.03.2007
(73) Proprietor: Rosemount, Inc., Eden Prairie, MN 55344-3695 (US)
(72) Inventor: PELUSO, Marcos, A., V., Chanhassen, MN 55317 (US); KARSCHNIA, Robert, J., Chaska, MN 55318 (US)
(74) Representative: Bohnenberger, Johannes
(86) International application number: PCT/US2005/019742
(87) International publication number: WO 2005/124485

(56) References cited:
- WO-A-2004/010645
- PEE SUAT HOON ET AL: "Foundation<TM> fieldbus high speed ethernet (HSE) implementation" PROCEEDINGS OF THE 2002 IEEE INTERNATIONAL SYMPOSIUM ON INTELLIGENT CONTROL.(ISIC'02). VANCOUVER, CANADA, OCT. 27 - 30, 2002, IEEE INTERNATIONAL SYMPOSIUM ON INTELLIGENT CONTROL, NEW YORK, NY : IEEE, US, 27 October 2002 (2002-10-27), pages 777-782, XP010623079 ISBN: 0-7803-7620-X
- SAUTER T ET AL: "Achievement of secure Internet access to fieldbus systems" MICROPROCESSORS AND MICROSYSTEMS, IPC BUSINESS PRESS LTD. LONDON, GB, vol. 26, no. 7, 10 September 2002 (2002-09-10), pages 331-339, XP004374053 ISSN: 0141-9331
- PAL S ET AL: "Development of network capable smart transducer interface for traditional sensors and actuators" SENSORS AND ACTUATORS A, ELSEVIER SEQUOIA S.A., LAUSANNE, CH, vol. 112, no. 2-3, 1 May 2004 (2004-05-01), pages 381-387, XP004505729 ISSN: 0924-4247

## Description

This patent relates generally to process control systems and, more particularly, to a remote processing and protocol conversion interface module.

### BACKGROUND

Process control systems, like those used in chemical, petroleum or other processes, typically include at least one centralized process controller communicatively coupled to at least one host or operator workstation and to one or more field devices via analog and/or digital buses or other communication lines or channels. The field devices, which may be, for example, valves, valve positioners, switches, transmitters (e.g., temperature, pressure and flow rate sensors), etc. perform functions within the process such as opening or closing valves and measuring process parameters. The process controller receives signals indicative of process measurements made by the field devices and/or other information pertaining to the field devices via an input/output (I/O) device, uses this information to implement a control routine and then generates control signals which are sent over the buses or other communication channels via the input/output device to the field devices to control the operation of the process. Information from the field devices and the controller is typically made available to one or more applications executed by the operator workstation to enable an operator to perform any desired function with respect to the process, such as viewing the current state of the process, modifying the operation of the process, configuring the process, documenting the process, etc.

Over the last decade or so, smart field devices including a microprocessor and a memory have become prevalent in the process control industry. In addition to performing a primary function within the process, smart field devices may store data pertaining to the device, communicate with the controller and/or other devices in a digital or combined digital and analog format, and perform secondary tasks such as self-calibration, identification, diagnostics, etc.

In the past, standard communication protocols were developed to enable controllers and field devices from different manufacturers to exchange data using standard formats. In many cases, however, the variations in the communication protocols made them suitable for use in some environments while others were more suitable elsewhere, even within the same plant or facility. For example, a 4-20 milliampere ("mA") protocol has good noise immunity but requires dedicated wiring. A high speed Ethernet (HSE) protocol may be fast but often requires expensive rewiring. Other protocols, such as controller area network ("CAN"), HART®, H1, Foundation™ Fieldbus ("Fieldbus"), Actuator Sensor Interface ("AS-Interface" or "ASI") and others have features and drawbacks including maximum length of cable run, multi-drop/single drop, intrinsically safe (for explosive environments), noise immunity, backward compatibility, supplemental power, etc. Sometimes the features often dictate the use of one protocol and its associated wiring even though it is not suitable for use in an entire plant or facility. Accommodations must be made to deal with the drawbacks. For example, to compensate for short distance wiring runs, plants may use an arrangement where a single field process control module is coupled to a single control board using one protocol. Then, the control board communicates to a central controller via a second protocol more suited to that connection. For example, a 3051S Super Module may be coupled to a Fieldbus feature board by a CAN network, and the Fieldbus feature board communicates to a central controller, or other upstream data manager, using an H1 protocol network. Such architectures solve problems associated with incompatible wiring and protocol, but it is still relatively expensive, and may be relatively difficult to maintain. Further information pertaining to the prior art can be found in Pee Suat Hoon; Yang Rong Huan; Berge J., Barnaby Sim: Foundation™ Fieldbus High Speed Ethernet (HSE) Implementation, Proceedings of the 2002 IEEE International Symposium on Intelligent Control (ISIC '02), Vancouver, CA, Oct. 27-30, 2002, ISBN 0-7803-7620-X, PG 777-782 that discloses, *inter alia,* a HSE linking device (LD) that provides access to H1 devices connected on Foundation^{™} Fieldbus H1 networks. They also provide H1-level bridging between H1 networks on the same Linking Device. Remote bridging between H1 networks connected to different LDs and to other HSE-resident end-systems. LDs are able to respond to TCP/UDP access initiated by other HSE end-systems. While linking device are used for Foundation^{™} Fieldbus devices, a HSE gateway device (GD) provides the connection of applications running in non-HSE (*i.e*. foreign) networks.
Regarding remote operation of Foundation^{™} fieldbus control systems; the aforementioned document also teaches that users were able to change the set points and other user configuration parameters such as range from a remote site linked by the Internet. It also teaches that diagnostic functions such as device failure and sensor failure were carried out and that engineers were able to troubleshoot a Foundation^{™} fieldbus installation from a remote site when failure happened. Other parameters such as the BLOCK_ERR and XD_SCALE may also be consulted to confirm the health of the fieldbus devices.

### BRIEF DESCRIPTION OF THE DRAWINGS

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the present invention.

FIG. 1 is a simplified and representative block diagram of a prior art process control system;

FIG. 2 is a simplified and representative block diagram of process control system using enhanced protocol conversion; and

FIG. 3 is a simplified and representative block diagram of a remote processing and protocol conversion interface module.

### DETAILED DESCRIPTION

While this invention is susceptible of embodiment in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

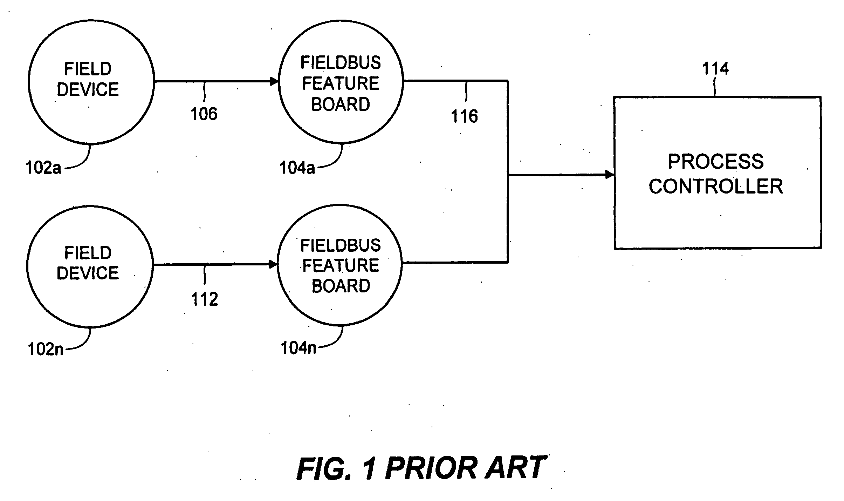

Referring to Fig. 1, a block diagram of a prior art system is shown. A first field device 102a is coupled to a first Fieldbus board 104a via a network 106. Data on the network 106 is communicated using a first protocol, such as CAN. Another field device 102n may be present and in communication with another Fieldbus board 104n using another network 112 and corresponding protocol. The two networks 106, 112 may use the same protocol, but factors such as distance or environmental condition such as electromagnetic interference ("EMI") may dictate that the two networks 106, 112 are different both in topology and protocol. The field devices 102a-n may be any of a range of actuators, for example valves, valve positioners, switches, motors etc., or sensors, for monitoring, for example temperature, pressure, liquid level, flow rate, etc.

Each of the Fieldbus boards 104a-n is programmed to send and receive data with a respective field device 102a-n. The data sent may include instructions for setting an actuator, requests for current state or requests for status such as the health of the field device. Data received from the field device 102 may include acknowledgements of setting requests, responses to other requests, or alarms, for example. The Fieldbus board 104 may, in some embodiments, use a higher speed network 116, such as HSE, to communicate with a process controller 114.

In most cases, a single network and protocol cannot be used between a field device 102 and a process controller 114 due to speed and flexibility on one hand and ruggedness, addressability and data integrity on the other. The Fieldbus boards 104a-n provide local instruction and monitoring services, data conversion and protocol translation between the separate data networks. However, each Fieldbus board carries an overhead in power supply electronics, protocol converters, memory and processor.

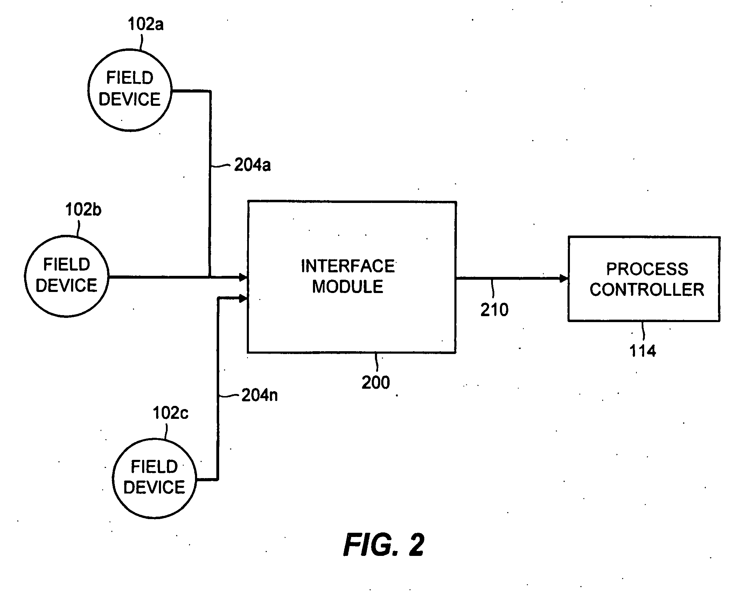

FIG. 2, illustrates a simplified and representative block diagram of a process control system of the preset invention. An interface module 200 is coupled to a plurality of field devices 102a-n. The plurality of field devices 102a-n, as discussed above, may include sensors and actuators. One or more networks 204a-n and their respective protocols may be incorporated in communication between the interface module 200 and the plurality of field devices 102a-c. For example, the first network 204a, supporting a protocol such as CAN, may link several of the plurality of field devices 102a-b with the interface module 200 while a second network 204n, supporting a protocol such as ASI, is used to link another of the plurality of field devices represented by 102n to the interface module 200. The interface module 200 communicates with a process controller 114 via a third network 210, for example, HSE. The interface module 200 with the ability to communicate with multiple field devices 102a-n and at least one process controller 114, allows sharing of common overhead electronics, can reduce home run and power wiring, and may lower maintenance and update costs.

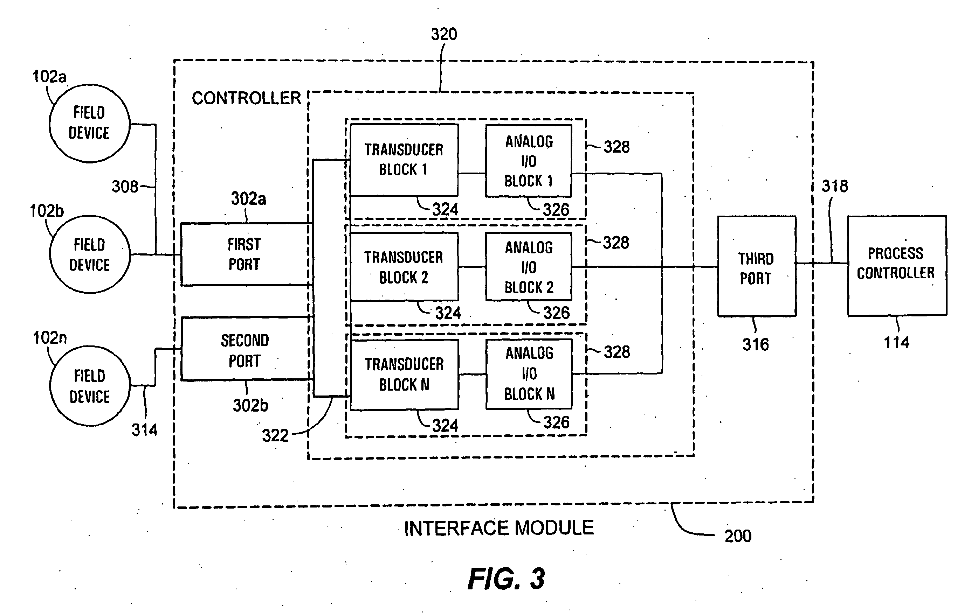

A simplified and representative block diagram of a remote processing and protocol conversion interface module for use in a process control system is illustrated in FIG. 3. The interface module 200 has at least one port 302a for communicating with at least one field device 102a. The port 302a may communicate with an additional field device 102b using a network 308 common to both field devices, such as CAN. Additional field device ports, such as port 302b, may be used for communication with more field devices, for example, field device 102n using another network 314, for example, ASI. A port 316 couples the interface module 200 to a process controller 114 or web service (not depicted) using a high speed or multi-drop network 318, such as HSE. A controller 320 couples the field device ports 302a-b and the port 316. Each of the ports 302a-b, 316 may incorporate specific protocol handlers for implementing the requirements for communication, such as, but not limited to, data buffers, error checking and correction, packetization, level shifters, coders and decoders ("codecs").

The controller 320 comprises a communication interface 322 to couple the field device ports 302a-b to a plurality of transducer blocks 324. The transducer blocks 324, in turn are coupled to analog blocks 326. Together, one of transducer blocks 324 and a respective one of the analog blocks 326 make up one of the plurality of process function modules 328.

The communication interface 322 manages the routing of data between the field device ports 302a-b and the appropriate one of the transducer blocks 324. The transducer blocks 324 are defined by the HSE standard as having custom functions. For example, transducer blocks 324 are required for instrumentation and are specific to the measurement being taken. Examples of instrumentation are pressure and temperature. In an exemplary embodiment, the field device 102a may supply a pulse-coded reading that corresponds to temperature, the reading formatted for transmission over a CAN protocol network 308. The port 302a can receive and process the CAN signal where the interface module 322 is operable to convert and route the signal to a transducer block 324 assigned to that particular field device 102a. The transducer block 324 converts the data into a measurement using an method adapted to that type of field device 102a. The measurement, now converted to a raw temperature, is passed to the corresponding analog block 326. That analog block operates to convert the raw temperature reading to a generic format, defined by the applicable standard, usable for process control, for example, degrees Celsius. When all the conversion and processing is complete, the data is passed to the port 316 where it is passed through a protocol stack for transmission to the process controller 114.
In general, a field device 102a-n may supply a raw digital signal, requiring conversion to a reading. Another of many possible functions performed in the transducer blocks 324 is scaling and formatting of readings not requiring data conversion. The analog blocks 326 are standard modules and may be configured as inputs or outputs. The analog blocks 326 take any measurement and convert it to an appropriate generic format for use in a control strategy. The analog blocks 326 may also implement a control strategy or perform other process functions. The analog blocks 326 are coupled to the port 316 where protocol conversion, formatting, and low-level communication stack functions are implemented.

In operation, the controller 320 is programmed to receive data communicated on the first network 308 from each of the plurality of field devices 102a-b via the first port 302a. The controller 320 implements a plurality of transducer blocks 324 and analog blocks 326, in combination forming process function modules 328. Each of the process function modules 328 is assigned to one of the field devices 102a-n and is adapted to perform process control functions, for example data translation, limit checking, alarm management, scheduled health queries, etc. The plurality of transaction blocks 324 and analog blocks 326 process the data according to programming specific to the type and function of its respective field device. In one embodiment at least one of the plurality of process function modules 328, that is a transducer/analog block pair, is programmed to process CAN commands received at the first port 302a. The process function modules 328 create processed data for use in the second network 318 and transmit the processed data to the second network 318 via the second network port 316 using a second protocol, for example, HSE.

The controller 320 can be programmed to supply diagnostic data not only regarding the plurality of field devices 102a-n, but also to report diagnostic data about the interface module 200 itself. These diagnostic reports can be made to an upstream process controller 114 or process monitor (not depicted). The controller 320 can be further programmed to implement electronic mail services. The controller 320 can send operational data, including alarm messages about either the interface module 200 or one of the plurality of field modules 102a-n via an email message sent via the port 316. Recipients for such an email message could be on-call maintenance personnel, engineers, or other plant managers as well as computers or controllers (not depicted) adapted to process email notifications.

The first network 308, for communication with the field devices 102a-n may be a CAN network, a HART network, a MODbus network, a 4-20 ma network among others, wherein the corresponding one of the process function modules 328 is adapted to decode that protocol. The second network can be an HSE network; or other network supporting Internet Protocol (IP) packets.

The interface module 200 may be programmed remotely by a message from the process controller 114 or another network device. Such programming messages may be received via an Internet Protocol message or other supported protocol.

The components for building the interface module are known and available. Integrated circuits supporting major protocols are available from commercial suppliers. Similarly, the controller is or may include one or more microprocessors from commercial semiconductor companies and be programmed in a language suitable to the application. For example, highly time critical control applications may be programmed in assembler, whereas less critical monitoring functions may be programmed in 'C'. Where power operation is desired, custom or semi-custom integrated circuit may be used. The translation of functions between software and logic is known to those of ordinary skill in the art.

The ability to connect multiple field devices to single interface module 200 and implement multiple process function modules 328 for each specific field device brings a new level of sophistication to distributed process control. Enhanced messaging, repurposing and remote reprogramability are combined in an interface module capable of supporting a variety of field devices and network protocols.

Various embodiments of methods and apparatus for managing field devices by a remote processing and protocol conversion interface module have been discussed and described. It is expected that these embodiments or others in accordance with the present invention will have application to many kinds of process control situations where an operator usher may wish to manage multiple field devices but lower cost and increase maintainability. Using the principles and concepts disclosed herein advantageously allows or provides for improved process control as well as improved accessibility for programming and alarm notification.

## Claims

1. An interface module (200) for use in a process control system including a first network (204a) supporting a first protocol, the first network having a plurality of field devices (102a, 102b), and a second network (210) having a second protocol, the interface module (200) operatively connecting the first network (204a) to the second network (210), the interface module comprising:
a first port (302a) for coupling to the first network;
a second port (316) for coupling to the second network; and
a controller (320) operatively coupled between the first and second ports, the controller (320) comprising a processor and a memory operatively coupled to the processor,
the controller being programmed to:
receive a data communicated using the first protocol from each of the plurality of field devices (102a, 102b) via the first port (302a);
implement a plurality of process function modules (328) adapted to perform process control functions, each of the plurality of process function modules (328) corresponding to a respective one of the plurality of field devices (102a, 102b), the plurality of process function modules (328) processing the data from its respective field device to create a processed data for use in the second network (318); and
transmit the processed data to the second network (318) using the second protocol via the second port (316).

2. The interface module of claim 1, wherein the first network (308) is a controller area network (CAN).

3. The interface module of claim 1, wherein the first network (308) is a HART network.

4. The interface module of claim 1, wherein the first network (308) is a MODbus network.

5. The interface module of any of the preceding claims, wherein the second network (318) is a high speed Ethernet network.

6. The interface module of any of claims 1 to 4, wherein the second network (318) is FOUNDATION Fieldbus High Speed Ethernet.

7. The interface module of claim 1, wherein each of the plurality of process function modules (328) is programmed to process CAN commands received at the first port.

8. The interface module of claim 7, wherein the first network (308) is a CAN network and the second network (318) is a high speed Ethernet network.

9. The interface module of any of the preceding claims, wherein the controller is programmed to implement a communication interface for receiving a message encoded with the first protocol from a one of the plurality of field devices (102a, 102b).

10. The interface module of any of the preceding claims, in particular claim 9, wherein the interface module (200) comprises a third port (302b) and the controller (320) is programmed to implement a second communication interface for receiving a message encoded with a third protocol via the third port (302b).

11. The interface module of any of the preceding claims, wherein the controller is programmed to support Internet protocol (IP) messages communicated via the second port (316).

12. The interface module of any of the preceding claims, wherein the controller (320) is programmed to supply diagnostic data regarding one of the interface module (328) and a one of the plurality of field devices (102a, 102b).

13. The interface module of any of the preceding claims, wherein the controller (328) is programmed to send an email message via the second port (316).

14. The interface module of claim 13, wherein the email message comprises an alarm message related to a condition of one of the interface controller (320) and a one of the plurality of field devices (102a, 102b).

15. A method of using an interface module for managing data from a plurality of field devices when communicating between two process control networks having different communication protocols comprising:
assigning a process function module to an each of the plurality of field devices;
receiving a data from each of the plurality of field devices;
decoding the data using a network protocol corresponding to the each of the plurality of field devices;
processing the data with the process function module corresponding to the each of the plurality of field devices to form a result;
transforming the result to an other network protocol;
sending the result using the other network protocol.

16. The method of claim 15, wherein decoding the network protocol comprises decoding a CAN network protocol.

17. The method of claim 15 or 16, wherein decoding the network protocol comprises decoding a HART network protocol.

18. The method of any of claims 15 to 17, wherein decoding the network protocol comprises decoding a 4-20 mA network protocol.

19. The method of any of claims 15 to 18, wherein the other network protocol is a high speed Ethernet protocol

20. The method of any of claims 15 to 18, wherein the other network protocol is FOUNDATION Fieldbus High Speed Ethernet.

21. The method of any of claims 15 to 20, wherein the transforming the result to another network protocol comprises transforming the result to a high speed Ethernet protocol.

22. The method of any of claims 15 to 21, wherein the processing the data with the process function module comprises applying a field device-specific algorithm to the data to form the result.

23. The method of any of claims 15 to 22, further comprising:
receiving an Internet Protocol message for configuring the interface module.

24. The method of any of claims 15 to 23, further comprising:
sending an Internet Protocol message related to a condition of the interface module.

25. The method of any of claims 15 to 24, further comprising:
sending an electronic mail message related to a condition of the interface module.

26. The method of any of claims 15 to 25, further comprising:
sending an electronic mail message related to a condition of the each of the plurality of field devices.

## Patentansprüche

1. Schnittstellenmodul (200) zur Verwendung in einem Prozesssteuerungssystem mit einem ersten Netz (204a), das ein erstes Protokoll unterstützt, wobei das erste Netz über mehrere Feldgeräte (102a, 102b) verfügt, und einem zweiten Netz (210) mit einem zweiten Protokoll, wobei das Schnittstellenmodul (200) das erste Netz (204a) in Wirkverbindung an das zweite Netz (210) anschließt, wobei das Schnittstellenmodul umfasst:
einen ersten Anschluss (302a) zum Verbinden mit dem ersten Netz;
einen zweiten Anschluss (316) zum Verbinden mit dem zweiten Netz; und
eine Steuereinheit (320), die in Wirkverbindung zwischen dem ersten und zweiten Anschluss angeschlossen ist, wobei die Steuereinheit (320) einen Prozessor und einen in Wirkverbindung an den Prozessor angeschlossenen Speicher umfasst,
wobei die Steuereinheit programmiert ist, um:
Daten, die von jedem der mehreren Feldgeräte (102a, 102b) her übertragen werden, unter Nutzung des ersten Protokolls über den ersten Anschluss (302a) zu empfangen;
mehrere Prozessfunktionsmodule (328) einzusetzen, die dazu ausgelegt sind, Prozesssteuerungsfunktionen durchzuführen, wobei jedes der mehreren Prozessfunktionsmodule (328) einem jeweiligen der mehreren Feldgeräte (102a, 102b) entspricht, wobei die mehreren Prozessfunktionsmodule (328) die Daten von ihrem jeweiligen Feldgerät verarbeiten, um verarbeitete Daten zur Verwendung im zweiten Netz (318) zu schaffen; und
die verarbeiteten Daten unter Nutzung des zweiten Protokolls über den zweiten Anschluss (316) an das zweite Netz (318) zu übertragen.

2. Schnittstellenmodul nach Anspruch 1, wobei es sich bei dem ersten Netz (308) um ein Steuereinheitsbereichsnetz (Controller Area Network - CAN) handelt.

3. Schnittstellenmodul nach Anspruch 1, wobei es sich bei dem ersten Netz (308) um ein HART-Netz handelt.

4. Schnittstellenmodul nach Anspruch 1, wobei es sich bei dem ersten Netz (308) um ein MODbus-Netz handelt.

5. Schnittstellenmodul nach einem der vorhergehenden Ansprüche, wobei es sich bei dem zweiten Netz (318) um ein schnelles Ethernet-Netz handelt.

6. Schnittstellenmodul nach einem der Ansprüche 1 bis 4, wobei es sich bei dem zweiten Netz (318) um ein schnelles FOUNDATION Feldbus-Ethernet handelt.

7. Schnittstellenmodul nach Anspruch 1, wobei jedes der mehreren Prozessfunktionsmodule (328) dazu programmiert ist, CAN-Befehle zu verarbeiten, die am ersten Anschluss eingehen.

8. Schnittstellenmodul nach Anspruch 7, wobei es sich bei dem ersten Netz (308) um ein CAN-Netz und beim zweiten Netz (318) um ein schnelles Ethernet-Netz handelt.

9. Schnittstellenmodul nach einem der vorhergehenden Ansprüche, wobei die Steuereinheit dazu programmiert ist, eine Kommunikationsschnittstelle einzusetzen, um eine mit dem ersten Protokoll codierte Nachricht von einem der mehreren Feldgeräte (102a, 102b) her zu empfangen.

10. Schnittstellenmodul nach einem der vorhergehenden Ansprüche, insbesondere Anspruch 9, wobei das Schnittstellenmodul (200) einen dritten Anschluss (302b) umfasst und die Steuereinheit (320) dazu programmiert ist, eine zweite Kommunikationsschnittstelle einzusetzen, um eine mit einem dritten Protokoll codierte Nachricht über den dritten Anschluss (302b) zu empfangen.

11. Schnittstellenmodul nach einem der vorhergehenden Ansprüche, wobei die Steuereinheit dazu programmiert ist, Internetprotokoll-Nachrichten (IP-Nachrichten) zu unterstützen, die über den zweiten Anschluss (316) übertragen werden.

12. Schnittstellenmodul nach einem der vorhergehenden Ansprüche, wobei die Steuereinheit (320) dazu programmiert ist, Diagnosedaten zu liefern, die eines der Schnittstellenmodule (328) und eines der mehreren Feldgeräte (102a, 102b) betreffen.

13. Schnittstellenmodul nach einem der vorhergehenden Ansprüche, wobei die Steuereinheit (320) dazu programmiert ist, eine E-Mail-Nachricht über den zweiten Anschluss (316) zu verschicken.

14. Schnittstellenmodul nach Anspruch 13, wobei die E-Mail-Nachricht eine Alarmnachricht enthält, die sich auf einen Zustand der Schnittstellensteuereinheit (320) und/oder eines der mehreren Feldgeräte (102a, 102b) bezieht.

15. Verfahren zum Verwenden eines Schnittstellenmoduls zum Verwalten von Daten von mehreren Feldgeräten beim Übertragen zwischen zwei Prozesssteuerungsnetzen mit unterschiedlichen Kommunikationsprotokollen, Folgendes umfassend:
einem jeden der mehreren Feldgeräte ein Prozessfunktionsmodul zuzuteilen;
Daten von jedem der mehreren Feldgeräte her zu empfangen;
die Daten unter Nutzung eines Netzprotokolls zu decodieren, das den mehreren Feldgeräten jeweils entspricht;
die Daten mit dem Prozessfunktionsmodul, das den mehreren Feldgeräten jeweils entspricht, zu verarbeiten, um ein Ergebnis zu bilden;
das Ergebnis auf ein anderes Netzprotokoll abzuwandeln;
das Ergebnis unter Nutzung des anderen Netzprotokolls zu verschicken.

16. Verfahren nach Anspruch 15, wobei das Decodieren des Netzprotokolls umfasst, ein CAN-Netzprotokoll zu decodieren.

17. Verfahren nach Anspruch 15 oder 16, wobei das Decodieren des Netzprotokolls umfasst, ein HART-Netzprotokoll zu decodieren.

18. Verfahren nach einem der Ansprüche 15 bis 17, wobei das Decodieren des Netzprotokolls umfasst, ein 4-20mA-Netzprotokoll zu decodieren.

19. Verfahren nach einem der Ansprüche 15 bis 18, wobei es sich bei dem anderen Netzprotokoll um eine schnelles Ethernet-Protokoll handelt.

20. Verfahren nach einem der Ansprüche 15 bis 18, wobei es sich bei dem anderen Netzprotokoll um eine schnelles FOUNDATION Feldbus-Ethernet handelt.

21. Verfahren nach einem der Ansprüche 15 bis 20, wobei das Abwandeln des Ergebnisses auf ein anderes Netzprotokoll umfasst, das Ergebnis auf ein schnelles Ethernet-Protokoll abzuwandeln.

22. Verfahren nach einem der Ansprüche 15 bis 21, wobei das Verarbeiten der Daten mit dem Prozessfunktionsmodul umfasst, einen feldgerätspezifischen Algorithmus auf die Daten anzuwenden, um das Ergebnis zu bilden.

23. Verfahren nach einem der Ansprüche 15 bis 22, darüber hinaus umfassend:
Empfangen einer Internet-Protokoll-Nachricht, um das Schnittstellenmodul zu konfigurieren.

24. Verfahren nach einem der Ansprüche 15 bis 23, darüber hinaus umfassend:
Verschicken einer Internet-Protokoll-Nachricht, die sich auf einen Zustand des Schnittstellenmoduls bezieht.

25. Verfahren nach einem der Ansprüche 15 bis 24, darüber hinaus umfassend:
Verschicken einer E-Mail-Nachricht, die sich auf einen Zustand des Schnittstellenmoduls bezieht.

26. Verfahren nach einem der Ansprüche 15 bis 25, darüber hinaus umfassend:
Verschicken einer E-Mail-Nachricht, die sich auf einen Zustand jedes der mehreren Feldgeräte bezieht.

## Revendications

1. Module d'interface (200) pour une utilisation dans un système de commande de traitement comprenant un premier réseau (204a) supportant un premier protocole, le premier réseau présentant une pluralité de dispositifs de terrain (102a, 102b), et un deuxième réseau (210) présentant un deuxième protocole, le module d'interface (200) reliant de manière fonctionnelle le premier réseau (204a) au deuxième réseau (210), le module d'interface comprenant :
un premier port (302a) pour un couplage au premier réseau ;
un deuxième port (316) pour un couplage au deuxième réseau ; et
une unité de commande (320) couplée de manière fonctionnelle entre les premier et deuxième ports, l'unité de commande (320) comprenant un processeur et une mémoire couplée de manière fonctionnelle au processeur,
l'unité de commande étant programmée pour :
recevoir des données communiquées en utilisant le premier protocole à partir de chacun parmi la pluralité de dispositifs de terrain (102a, 102b) par l'intermédiaire du premier port (302a) ;
mettre en oeuvre une pluralité de modules (328) de fonction de traitement adaptés pour réaliser des fonctions de commande de traitement, chacun parmi la pluralité de modules (328) de fonction de traitement correspondant à respectivement un parmi la pluralité de dispositifs de terrain (102a, 102b), la pluralité de modules (328) de fonction de traitement traitant les données en provenance de leur dispositif de terrain respectif pour créer des données traitées destinées à être utilisées dans le deuxième réseau (318) ; et
transmettre l'information traitée au deuxième réseau (318) en utilisant le deuxième protocole par l'intermédiaire du deuxième port (316).

2. Module d'interface selon la revendication 1, dans lequel le premier réseau (308) est un réseau de zone d'unité de commande (CAN).

3. Module d'interface selon la revendication 1, dans lequel le premier réseau (308) est un réseau HART.

4. Module d'interface selon la revendication 1, dans lequel le premier réseau (308) est un réseau MODbus.

5. Module d'interface selon l'une quelconque des revendications précédentes, dans lequel le deuxième réseau (318) est un réseau Ethernet haute vitesse.

6. Module d'interface selon l'une quelconque des revendications 1 à 4, dans lequel le deuxième réseau (318) est un réseau Ethernet haute vitesse à bus de terrain FOUNDATION.

7. Module d'interface selon la revendication 1, dans lequel chacun parmi la pluralité de modules (328) de fonction de traitement est programmé pour traiter des commandes CAN reçues au niveau du premier port.

8. Module d'interface selon la revendication 7, dans lequel le premier réseau (308) est un réseau CAN et le deuxième réseau (318) est un réseau Ethernet haute vitesse.

9. Module d'interface selon l'une quelconque des revendications précédentes, dans lequel l'unité de commande est programmée pour mettre en oeuvre une interface de communication destinée à recevoir un message encodé au moyen du premier protocole à partir d'un parmi la pluralité de dispositifs de terrain (102a, 102b).

10. Module d'interface selon l'une quelconque des revendications précédentes, en particulier la revendication 9, dans lequel le module d'interface (200) comprend un troisième port (302b) et l'unité de commande (320) est programmée pour mettre en oeuvre une deuxième interface de communication destinée à recevoir un message encodé au moyen d'un troisième protocole par l'intermédiaire du troisième port (302b).

11. Module d'interface selon l'une quelconque des revendications précédentes, dans lequel l'unité de commande est programmée pour supporter des messages Internet Protocol (IP) communiqués par l'intermédiaire du deuxième port (316).

12. Module d'interface selon l'une quelconque des revendications quelconques, dans lequel l'unité de commande (320) est programmée pour fournir des données de diagnostic concernant un des modules d'interface (328) et un parmi la pluralité de dispositifs de terrain (102a, 102b).

13. Module d'interface selon l'une quelconque des revendications précédentes, dans lequel l'unité de commande (328) est programmée pour envoyer un message courriel par l'intermédiaire du deuxième port (316).

14. Module d'interface selon la revendication 13, dans lequel le message courriel comprend un message d'alarme en rapport avec un état de l'unité de commande d'interface (320) et/ou d'un parmi la pluralité de dispositifs de terrain (102a, 102b).

15. Procédé d'utilisation d'un module d'interface pour gérer des données provenant d'une pluralité de dispositifs de terrain lors d'une communication entre deux réseaux de commande de traitement présentant différents protocoles de communication comprenant les étapes suivantes consistant à :
assigner un module de fonction de traitement à chacun parmi la pluralité de dispositifs de terrain;
recevoir des données provenant de chacun parmi la pluralité de dispositifs de terrain;
décoder les données en utilisant un protocole de réseau correspondant à chacun parmi la pluralité de dispositifs de terrain;
traiter les données avec le module de fonction de traitement correspondant à chacun parmi la pluralité de dispositifs de terrain pour former un résultat ;
transformer le résultat vers un autre protocole de réseau ;
envoyer le résultat en utilisant l'autre protocole de réseau.

16. Procédé selon la revendication 15, dans lequel le décodage du protocole réseau comprend le décodage d'un protocole réseau CAN.

17. Procédé selon la revendication 15 ou 16, dans lequel le décodage du protocole réseau comprend le décodage d'un protocole réseau HART.

18. Procédé selon la revendication 15 à 17, dans lequel le décodage du protocole réseau comprend le décodage d'un protocole réseau 4-20 mA.

19. Procédé selon l'une quelconque des revendications 15 à 18, dans lequel l'autre protocole réseau est un protocole Ethernet haute vitesse.

20. Procédé selon l'une quelconque des revendications 15 à 18, dans lequel l'autre protocole réseau est un protocole Ethernet haute vitesse à bus de terrain FOUNDATION.

21. Procédé selon l'une quelconque des revendications 15 à 20, dans lequel la transformation du résultat vers un autre protocole réseau comprend la transformation du résultat vers un protocole Ethernet haute vitesse.

22. Procédé selon l'une quelconque des revendications 15 à 21, dans lequel le traitement des données avec le module de fonction de traitement comprend l'application d'un algorithme spécifique du dispositif de terrain aux données pour former le résultat.

23. Procédé selon l'une quelconque des revendications 15 à 22, comprenant en outre l'étape consistant à :
recevoir un message Internet Protocol pour configurer le module d'interface.

24. Procédé selon l'une quelconque des revendications 15 à 23, comprenant en outre l'étape consistant à :
envoyer un message Internet Protocol en rapport avec un état du module d'interface.

25. Procédé selon l'une quelconque des revendications 15 à 24, comprenant en outre l'étape consistant à :
envoyer un message de courrier électronique en rapport avec un état du module d'interface.

26. Procédé selon l'une quelconque des revendications 15 à 25, comprenant en outre l'étape consistant à :
envoyer un message de courrier électronique en rapport avec un état de chacun parmi la pluralité de dispositifs de champ.
